# EUROPÄISCHE PATENTSCHRIFT

(11) **EP 0 573 796 B1**
(45) Veröffentlichungstag und Bekanntmachung des Hinweises auf die Patenterteilung: **21.08.1996**
(21) Anmeldenummer: 93107551.9
(22) Anmeldetag: 10.05.1993
(51) Int. Cl.: H02K 3/40

(54) **Glimmschutzanordnung für die Statorwicklung einer elektrischen Maschine**
Protection arrangement against corona from the stator winding of an electric machine
Agencement pour la protection contre les décharges corona de l'enroulement de stator d'une machine électrique

(30) Priorität: 10.06.1992 DE 4218928
(43) Veröffentlichungstag der Anmeldung: 15.12.1993
(73) Patentinhaber: ASEA BROWN BOVERI AG, CH-5401 Baden (CH)
(72) Erfinder: Schuler, Roland, CH-5430 Wettingen (CH)
(74) Vertreter: Hetzer, Hans Jürgen

(56) Entgegenhaltungen:
- DE-U- 8 703 580
- FR-A- 720 678
- US-A- 2 042 208
- PATENT ABSTRACTS OF JAPAN vol. 10, no. 386 (E-467) 24. Dezember 1986 & JP-A-61 177 134
- PATENT ABSTRACTS OF JAPAN vol. 10, no. 170 (E-412)(2226) 17. Juni 1986 & JP-A-61 022733
- PATENT ABSTRACTS OF JAPAN vol. 11, no. 95 (E-492)(2542) 25. März 1987 & JP-A-61 247 247

## Beschreibung

### Technisches Gebiet

Die Erfindung bezieht sich auf eine Glimmschutzanordnung für die Statorwicklung einer elektrischer Maschine gemäss dem Oberbegriff des Patentanspruchs 1.

### Technologischer Hintergrund und Stand der Technik

Die bereits über ihre gesamte Länge mit der Hauptisolation versehenen Statorwicklungsleiter rotierender elektrischer Maschinen erhalten im Nutteil einen Aussenglimmschutz. Dieser besteht heute in der Regel aus einer schon bei Isoliervorgang aufgebrachten halbleitendem Vlies oder Gewebe. Der Aussenglimmschutz muss über Blechpaketlänge soweit hinausgeführt werden, dass auch bei geringen Abständen gegen Druckplatten und Druckfingern des Blechpakets keine Entladungen auftreten können.

Bei Maschinen mit höheren Nennspannungen (5 kVolt und höher) schliesst sich an den Aussenglimmschutz ein Endenglimmschutz an. Dieser sorgt dafür, dass der Abbau des Potentials entlang des Leiters gegen das geerdete Blechpaket ohne die Möglichkeit von Gleit- oder Glimmentladungen erfolgt. Der Endenglimmschutz muss nicht nur für die Betriebsbeanspruchung, sondern vor allem für die zur Kontrolle der Herstellungsgüte anzuwendenden Prüfspannungen berechnet und ausgelegt sein. Für den Spannungsabbau mittels eines solchen Endenglimmschutzes ist eine bestimmte Isolierungslänge erforderlich. Bei Isolationen, die lediglich im Nutteil eine ausreichende Spannungsfestigkeit besitzen, muss deshalb die gerade Ausladung genügend lang sein, um die Spannungen zu beherrschen. Kontinuierliche Isolierungen dagegen lassen sich so ausführen, dass die Glimmschutzanordnung auch in der Evolvente aufgebracht werden kann unmittelbar anschliessend dem Nutteil. Dies ermöglicht eine gewünschte kürzere Ausladung, erfordert aber auch die volle Isolationsdicke bis zum Ende des Glimmschutzes. Zur Spannungssteuerung werden entweder Oberflächenbeläge in Form von Anstrichen oder halbleitenden Bändern mit einem bestimmten Leitfähigkeitswert aufgebracht (vgl. Sequenz "Herstellung der Wicklungen elektrischer Maschinen", Springer-Verlag Wien - New York, 1973, Seiten 156 - 158). Will man dabei einen möglichst linearen Spannungsverlauf über die Länge der Wickelkopfleiter erzielen, ergeben sich bei der Verwendung von halbleitenden Anstrichen Probleme, weil solche Anstriche im wesentlichen nur eine Oberflächenleitfähigkeit aufweisen.

Aus dem Patentabstract JP-A-61 177 134 ist eine Glimmschutzanordnung für die Statorwicklung einer elektrischer Maschine bekannt, umfassend ein um die Hauptisolation von Nutteil und Stirnbügelteil jedes Stabes der Statorwicklung gewickeltes halbleitendes textiles Glimmschutzband, wobei der Nutteil des Statorwicklungsstabes mit einem halbleitenden, volumenleitfähigen Glimmschutzband mit annähernd konstantem Ueberlappungsgrad in mindestens einer Lage umwikkelt ist und der Stirnbügelteil mit einem halbleitenden volumenleitfähigen Glimmschutzband in mindestens einer Lage umwickelt ist. Der Spannungsverlauf über die Länge der Wickelkopfleiter wird mittels Anpassung der Dicke des Glimmschutzes optimiert.

Ferner ist es aus der US-A-2 042 208 bekannt, den Spannungsverlauf über die Länge der Wickelkopfleiter durch einen Anstrich von stetig abnehmender Dicke zu erreichen.

### Kurze Darstellung der Erfindung

Ausgehend vom Stand der Technik liegt der Erfindung die Aufgabe zugrunde, eine Glimmschutzanordnung für die Statorwicklung einer elektrischen Maschine anzugeben, die einfach zu applizieren ist und mit der sich in einfacher Weise die Spannungscharakteristik im Wickelkopfteil der Stäbe beeinflussen und optimieren lässt.

Die Aufgabe wird erfindungsgemäss dadurch durch gelöst, dass der Ueberlappungsgrad vom Austritt des Stabes aus dem Statorblechkörper zum Stabende hin stetig oder abschnittsweise kleiner ist.

### Kurze Beschreibung der Zeichnungen

In der Zeichnung ist in schematischer Darstellung ein Ausführungsbeispiel der Erfindung dargestellt; dabei zeigt
- Fig.1: die Draufsicht auf eine Stabhälfte einer aus Roebelstäben aufgebauten Statorwicklung einer elektrischen Maschine;
- Fig.2: einen Querschnitt durch eine Statornut mit eingelegtem Stab;
- Fig.3: ein Diagramm zur Veranschaulichung der Spannungsverteilung längs des Stirnbügels des Stabes.

### Wege zur Ausführung der Erfindung

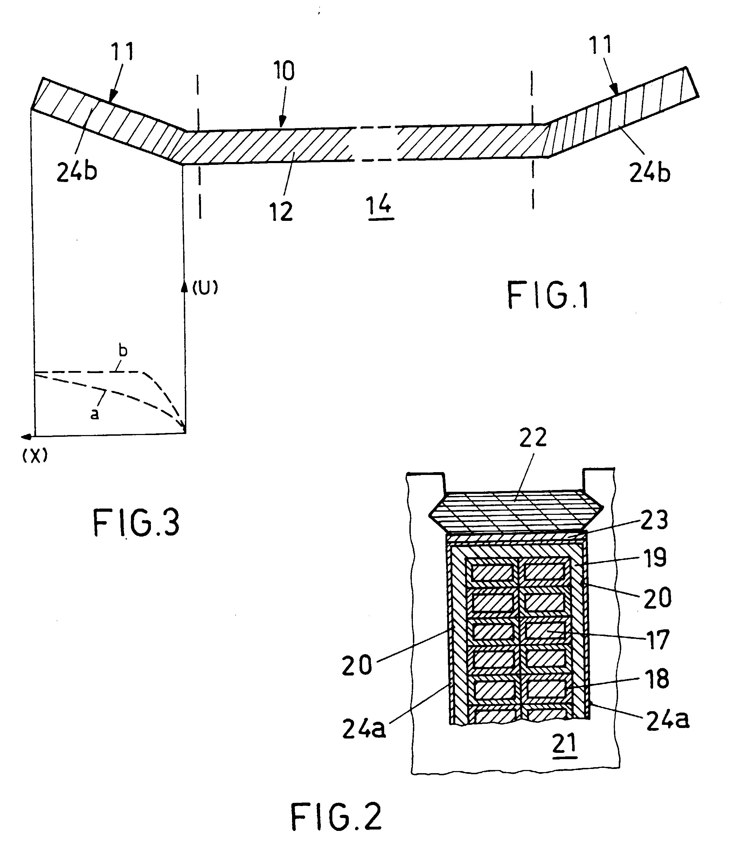

Eine Statorstab einer elektrischen Maschine gemäss Fig.1 weist im Nutbereich einen geraden Stababschnitt 10 und im Wickelkopfbereich oder Stirnbügelteil einen gebogenen Stababschnitt 11 auf. Der gerade Stababschnitt 10 überragt den Statorkörper 14. Der Stab ist über seine gesamte Länge mit einer generell mit der Bezugsziffer 12 bezeichneten Isolation versehen, die von einem Glimmschutzband umgeben ist, die Gegenstand der vorliegenden Erfindung ist.

Wie aus dem Querschnitt gemäss Fig.2 hervorgeht, ist der Stab aus einer Vielzahl gegeneinander isolierter Teilleiter 17 aufgebaut, die nach dem Roebel-Prinzip verdrillt sind. Jeder Teilleiter weist eine Teilleiter-Isolation 18 bekannter Bauart auf. Die Teilleiter 17 sind zu einem Leiterbündel zusammengefasst und von einer gemeinsamen Isolierhülse, der Hauptisolation 19, umgeben und liegen in einer Statornut 20 im Blechkörper 21 der Maschine. Die Fixierung des Stabes erfolgt durch Nutkeile 22 und Keilunterlagen 23. Die Hauptisolation 19 ist von einem Glimmschutzband 24a umgeben, das ein- oder mehrlagig um den Leiterstab gewickelt ist.

Im geraden Stababschnitt 10 ist dieses Glimmschutzband 24a mit gleichmässiger Ueberlappung aufgebracht, erkennbar am gleichmässigen Abstand der Schraffierlinien. Im Stirnbügelteil 11 hingegen ändert sich der Ueberlappungsgrad des Glimmschutzbandes 24b derart, dass im statorkörperseitigen Bereich ein grösserer Ueberlappungsgrad vorliegt als am Stabende. Vorzugsweise ändert sich dabei der Ueberlappungsgrad kontinuierlich über die Stablänge im Stirnbügelteil, in der Fig.1 am grösser werdenden Abstand der Schraffierlinien hin zum Stabende erkennbar. Es können sich jedoch auch mehrere Abschnitte folgen, die abschnittsweise einen konstanten Ueberlappungsgrad aufweisen.

Das Glimmschutzband 24a, 24b besteht aus einem textilen Träger, vorzugsweise aus Glasfaser-Gewebe, das mit einem halbleitenden Tränkmittel, beispielsweise mit Russ, Graphit oder Siliziumcarbid gefülltem Epoxidharz, getränkt ist.

Grundsätzlich können für Nut- und Stirnbügelteil dieselben Glimmschutzbänder verwendet werden, wobei es sich jedoch empfiehlt, unterschiedliche Bandtypen im Nut- und Bügelteil zu verwenden. So kommen im Nutteil 10 Bänder mit niedrigem Widerstand (z.B. Füllstoff Graphit und oder Russ), im Bügelteil höherer, meist spannungsabhängiger Widerstand (z.B. Füllstoff SiC) zur Anwendung, um die gewünschte Wirkungsweise des Glimmschutzes zu erzielen.

Normalerweise kommt man mit einer einzigen Lage Glimmschutzband 24b im Bügelteil 11 aus. Insbesondere bei Stäben mit kleiner Ausladung im Bügelteil 11 kann es zweckmässig sein, mehrere Lagen Glimmschutzband 24b übereinander anzubringen. Auch für diesen Fall gilt, dass dann in jeder Lage der Ueberlappungsgrad entweder stetig oder abschnittsweise gegen das Stabende hin abnimmt.

Im Diagramm gemäss Fig.3 ist die Spannungsverteilung eines mit der erfindungsgemässen Glimmschutzanordnung versehenen Stabes (Kurve a) im Vergleich mit einer herkömmlichen Ausführung (Kurve b) veranschaulicht. Man erkennt deutlich die sich dem Ideal (Gerade) annähernde Abflachung der Spannungsverteilung. Daraus resultiert eine gleichmässigere Belastung der Stabisolation und eine Erhöhung der Lebensdauer der Wicklung.

### Bezeichnungsliste

- 10: gerader Stababschnitte
- 11: gebogene Stababschnitt
- 12: Hauptisolation
- 14: Statorkörper
- 17: Teilleiter
- 18: Teilleiter-Isolation
- 19: Hauptisolation
- 20: Statornut
- 21: Statorblechkörper
- 22: Nutkeil
- 23: Keilunterlage
- 24a,24b: Glimmschutzband

## Patentansprüche

1. Glimmschutzanordnung für die Statorwicklung einer elektrischen Maschine, umfassend ein um die Hauptisolation von Nutteil (10) und Stirnbügelteil (11) jedes Stabes der Statorwicklung gewickeltes halbleitendes textiles Glimmschutzband, wobei der Nutteil (10) des Statorwicklungsstabes mit einem halbleitenden, volumenleitfähigen Glimmschutzband (24a) mit annähernd konstantem Ueberlappungsgrad in mindestens einer Lage umwickelt ist und der Stirnbügelteil (11) mit einem halbleitenden volumenleitfähigen Glimmschutzband (24b) in mindestens einer Lage umwickelt ist, dadurch gekennzeichnet, dass der Ueberlappungsgrad vom Austritt des Stabes aus dem Statorkörper (14) zum Stabende hin stetig oder abschnittsweise kleiner ist.

2. Glimmschutzanordnung nach Anspruch 1, dadurch gekennzeichnet, dass das Glimmschutzband (24a,24b) einen textilen Träger aus Glasgewebe aufweist, der mit einem halbleitenden Tränkmittel getränkt ist.

3. Glimmschutzanordnung nach Anspruch 2, dadurch gekennzeichnet, dass beim Glimmschutzband (24a) im Nutteil (10) das Tränkmittel Russ und/oder Graphit enthält.

4. Glimmschutzanordnung nach Anspruch 2 oder 3, dadurch gekennzeichnet, dass beim Glimmschutzband (24b) im Bügelteil (11) das Tränkmittel eine spannungsabhängige Widerstandcharakteristik aufweist und vorzugsweise aus mit Siliziumcarbid gefülltem Epoxidharz besteht.

5. Glimmschutzanordnung nach einem der Ansprüche 1 bis 4, dadurch gekennzeichnet, dass insbesondere bei Statorwicklungen mit kleiner Ausladung im Stirnbügelteil mehrere Lagen Glimmschutzbänder (24b) mit unterschiedlichem Ueberlappungsgrad vorgesehen sind.

## Revendications

1. Agencement pour la protection contre les décharges corona de l'enroulement de stator d'une machine électrique, comprenant une bande textile semi-conductrice de protection contre les décharges corona, enroulée autour de l'isolation principale de la partie d'encoche (10) et de la partie d'étrier avant (11) de chaque barreau de l'enroulement de stator, la partie d'encoche (10) du barreau de l'enroulement de stator étant entourée, en au moins une couche avec un degré de recouvrement approximativement constant, d'une bande semi-conductrice (24a) de protection contre les décharges corona, ayant une conductibilité de volume et la partie d'étrier avant (11) étant entourée en au moins une couche par une bande semi-conductrice (24b) de protection contre les décharges corona, ayant une conductibilité de volume, caractérisé en ce que le degré de recouvrement diminue de façon continue ou par tronçons depuis la sortie du barreau hors du corps de stator (14) jusqu'à l'extrémité du barreau.

2. Agencement pour la protection contre les décharges corona suivant la revendication 1, caractérisé en ce que la bande de protection contre les décharges corona (24a, 24b) présente un support textile en tissu de verre, qui est imprégné avec un agent d'imprégnation semiconducteur.

3. Agencement pour la protection contre les décharges corona suivant la revendication 2, caractérisé en ce que pour la bande de protection contre les décharges corona (24a) dans la partie d'encoche (10), l'agent d'imprégnation contient de la suie et/ou du graphite.

4. Agencement pour la protection contre les décharges corona suivant la revendication 2 ou 3, caractérisé en ce que pour la bande de protection contre les décharges corona (24b) dans la partie d'étrier (11), l'agent d'imprégnation présente une caractéristique de résistance dépendant de la tension et se compose de préférence de résine époxy remplie de carbure de silicium.

5. Agencement pour la protection contre les décharges corona suivant l'une des revendications 1 à 4, caractérisé en ce que, en particulier dans les enroulements de stator de faible longueur dans la partie d'étrier avant, il est prévu plusieurs couches de bande de protection contre les décharges corona (24b) avec un degré de recouvrement différent.

## Claims

1. Corona-shielding arrangement for the stator winding of an electric machine, comprising a semi-conductive textile corona-shielding strip wound around the major insulation of slot portion (10) and end yoke portion (11) of each bar of the stator winding, wherein the slot portion (10) of the stator winding bar is wound around in at least one layer with a semiconductive, volume-conducting corona-shielding strip (24a) having a virtually constant degree of overlap, and the end yoke portion (11) is wound around in at least one layer with a semiconductive, volume-conducting corona-shielding strip, characterized in that the degree of overlap from the exit of the bar from the stator body (14) to the bar end is smaller continuously or in sections.

2. Corona-shielding arrangement according to Claim 1, characterized in that the corona-shielding strip (24a, 24b) has a textile backing made from glass fabric and impregnated with a semiconductive impregnant.

3. Corona-shielding arrangement according to Claim 2, characterized in that in the corona-shielding strip (24a) in the slot portion (10) the impregnant contains carbon black and/or graphite.

4. Corona-shielding arrangement according to Claim 2 or 3, characterized in that in the corona-shielding strip (24a) in the yoke portion (11) the impregnant has a voltage-dependent resistance characteristic and preferably consists of epoxy resin filled with silicon carbide.

5. Corona-shielding arrangement according to one of Claims 1 to 4, characterized in that particularly in the case of stator windings having a small overhang projection in the end yoke portion a plurality of layers of corona-shielding strips (24b) with different degrees of overlap are provided.
